# EUROPEAN PATENT SPECIFICATION

(11) **EP 0 787 940 B1**
(45) Date of publication and mention of the grant of the patent: **14.08.2002**
(21) Application number: 97300567.1
(22) Date of filing: 29.01.1997
(51) Int. Cl.: F16L 55/165

(54) **Methods of and arrangements for lining pipes**
Verfahren und Anordnungen zum Beschichten von Rohren
Méthodes et arrangements pour le revêtement de tuyaux

(30) Priority: 31.01.1996 GB 9601922
(43) Date of publication of application: 06.08.1997
(73) Proprietor: Evolved Processes Limited, Marlborough, Wiltshire SN8 1HQ (GB)
(72) Inventor: Lippiatt, Raymond, Ramsbury, Wiltshire SN8 2RG (GB)
(74) Representative: Hutchins, Michael Richard

(56) References cited:
- WO-A-95/32381
- US-A- 5 205 886
- US-A- 5 487 411

## Description

This invention relates to methods of and arrangements for lining pipes.

In practice it is often desirable, with a damaged, faulty, and/or leaking pipe for example for water, where that pipe is reasonably structurally sound, not to replace the pipe nor to carry out a repair to the pipe as such, but to provide an impervious lining to that pipe to enable its satisfactory usable life to be extended.

To enable this to be achieved it has been proposed hitherto to insert into the faulty pipe in any disposition, a liner which has been deformed to be smaller than the host pipe to aid insertion and may be expanded to the internal diameter of the host pipe which will achieve the desired effect of sealing the pipe with respect to its faults and/or leakage, and provide many years further use for the lined pipe. Such a liner pipe may have a final diameter over wall thickness ratio typically between 60 and 26.

A liner pipe substantially as defined in the preamble to claim 1 appended hereto is disclosed in US-A-5,205,886.

A deformable two-layer liner pipe is disclosed in US-A-5,487,411.

It has also already been proposed to replace damaged or faulty pipes, such as water mains, by passing an expandable or percussive destructive mole through the pipe and towing behind it a replacement pipe, or alternatively a protective sleeve for later insertion therethrough of a replacement pipe.

It has also been proposed in such a circumstance, to tow through the destroyed faulty pipe a two layered replacement pipe, the outer layer of which is of a hard nature, such as polypropylene, which may be adapted to resist or accommodate and accept the damage caused by fragments of the destroyed faulty pipe and' the inner portion of which forms an appropriate new full pressure bearing pipe.

In addition it has been proposed to insert into an existing pipe a reduced diameter or deformed replacement pipe or liner pipe with relatively thick walls intended to be expanded to a round configuration within the host pipe. Such replacement pipes or liner pipes may have final diameter over wall thickness ratios typically between 33 and 10.

In all these instances, the liner pipe entered is of sufficient thickness to withstand the full or a substantial part of the internal pressure, and is intended to withstand or accommodate any abrasion damage as it is fed by being pushed and/or pulled into the host pipe, or the replacement pipe entered during or after destructive moling of an existing pipe is of sufficient thickness as above or incorporates an abrasion resistant outer layer. Such arrangements, although many of which are highly effective in the appropriate circumstances, are of course expensive in terms of installation and certainly in terms of the replacement pipe or liner pipe cost.

It has also been proposed to provide existing water mains, for example, with bore coatings of cementitious material such as concrete, or epoxy resin, in the latter case of a thin layer nature, to ensure protection of the pipe from the liquid or fluid (often water) passing therethrough or conversely protection of the fluid from contaminants in the host pipe due to corrosion or bacteriological formation for example. However such an arrangement does not necessarily provide protection against leakage, which is an increasing problem (as hereinabove indicated) at, for example, joints between the separate pipes making up the pipeline of a water main for example.

It is an object of the invention to provide a pipe lining arrangement, and a method for forming the same, which substantially attends to the above-mentioned problems.

Accordingly, in a first aspect, the invention provides apparatus for lining a faulty, damaged and/or leaking pipe (1) comprising a deformed liner (3) disposed within a protective sleeve (2), the liner (3) having initially a smaller overall outside diameter than the inner diameter of the host pipe (1); the protective sleeve (2) being arranged to protect the liner (3) from damage during insertion thereof within the host pipe (1) and being tightly or loosely disposed around the deformed liner (3) and also having initially a smaller overall outside diameter than the inner diameter of the host pipe (1); the arrangement, dimensions and nature of the liner (3) being such that upon or shortly after applying pressure therewithin, it expands substantially to fit the bore of the host pipe (1);
characterised in that:
the liner (3) is a thin walled liner and is provided in the form of a reel(4) having wound thereon the liner (3) disposed within the protective sleeve (2), and in that the sleeve (2) is burstable (e.g. by virtue of being weakened) or longitudinally slit; and bursts or, in the case of the longitudinally slit sleeve, expands as the liner (3) expands upon application of the said pressure.

In another aspect, the invention provides apparatus for lining a faulty, damaged and/or leaking host pipe (1) comprising a deformed liner (3) having initially a smaller overall outside diameter than the inner diameter of the host pipe (1); and a protective sleeve (2) to protect the liner from damage during insertion thereof within the host pipe (1); the sleeve (2) having initially a smaller overall outside diameter than the inner diameter of the host pipe (1); the arrangement dimensions and nature of the liner (3) being such that upon or shortly after applying pressure therewithin, it expands substantially to fit the bore of the host pipe (1);
characterised in that
the deformed liner (3) is a thin walled liner and the sleeve (2) is arranged to be inserted into the host pipe (1) before the liner (3) so as protect the liner (3) from damage during insertion thereof within the host pipe (1); and in that the sleeve (2) is burstable (e.g. by virtue of being weakened) or longitudinally slit; and bursts or, in the case of the longitudinally slit sleeve, expands as the liner (2) expands upon application of the said pressure.

Where the protective sleeve is retained within the host pipe, the arrangement and dimensions and nature of the liner and the sleeve are such that upon or shortly after application of pressure and/or heat within the liner, it expands or bursts the sleeve substantially to fit the bore of the host pipe.

The thin wall liner may, when initially disposed in the protective sleeve, have its natural diameter for later viscoelastic expansion for example. In this case the liner may be a close fit at the time of insertion. Alternatively the liner may be of a reduced and/or deformed diameter when initially disposed in the protective sleeve with respect to its natural diameter.

The thin wall liner in this invention may have a final diameter over wall thickness ratio typically between 50 and 150. The protective sleeve may have a final diameter over wall thickness ratio typically between 50 and 300.

In order that the invention may be more readily understood embodiments thereof will now be described by way of example with reference to the accompanying drawings in which:-
Figures 1 and 2 illustrate in section and schematically typical alternative arrangements of a host pipe together with protective sleeves and deformed thin wall liners disposed therein prior to enlargement of the deformed thin wall liners;
Figure 3 illustrates schematically a method of carrying out an installation in accordance with the invention;
Figures 4 and 5 illustrate a flattened protective sleeve with its supporting drum;
Figure 6 shows a transverse sectional view of the respective protective sleeve when released from the drum; and
Figure 7 illustrates in schematic section of an alternative arrangement of liner and sleeve.

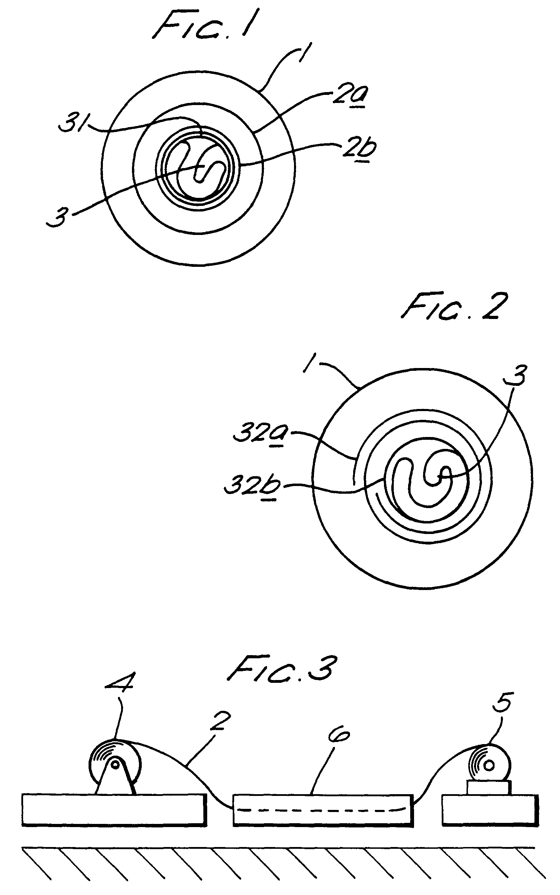

It will be seen from Figure 1 that the assembly essentially consists of a host pipe 1, a loosely or alternatively, a tightly fitting protective sleeve 2a and 2b respectively, and a deformed thin wall liner 3 held in its deformed state by ties or a wrapper 31. In the case of the tightly fitting protective sleeve 2b this may serve also to constrain the deformed liner 3 in its deformed shape.

Figure 2 shows the assembly as in Figure 1 except that a loosely or, alternatively, tightly fitting longitudinally slit and circumferentially overlapping protective 32a and 32b sleeve respectively is installed as shown.

The invention is applicable to host pipes of any material such as cast iron, steel, or plastics, and may be for example of any diameter related to practical terms for water distribution systems between 0.5" nominal diameter and 48" nominal diameter. The protective sleeve may be formed of a tube of any appropriate material or fabrication, such as polyethylene, polypropylene, nylon, woven mesh or impregnated or coated woven mesh or metal and may be loose or close fitted to the deformed thin wall liner (as described above) before and/or during insertion of the deformed liner into the host pipe.

The deformed thin wall liner may be a tube of any suitable material such as plastics, metal or woven hose deformed into a shape which reduces its effective diameter, and may be held in its reduced diameter formed for the purpose of installation by, for example taping, wrapping, sleeving or tying, any of which could be helical or spiral in nature, or by heat deformation, or by the protective sleeve itself.

The deformed thin wall liner may be formed from any suitable tubing which has been formed into a generally flat configuration and then folded along one or more generally longitudinal axis to a deformed shape.

The protective sleeve may either be left within the host pipe after installation of the liner, or alternatively may be withdrawn after such installation.

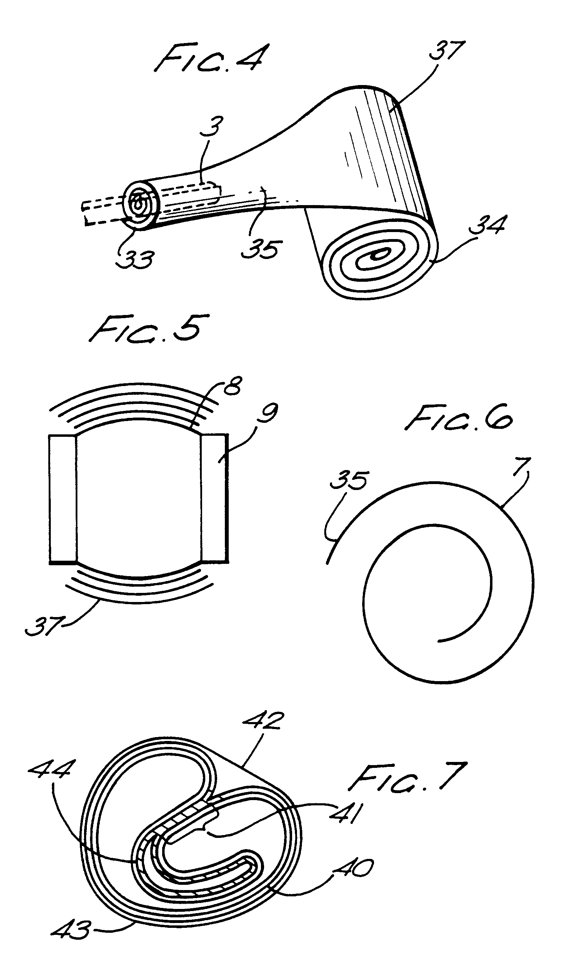

Referring to Figure 3 the method of installation illustrated shows by way of example a reel 4 around which a protective sleeve 2 is wound, incorporating therewithin the deformed thin walled liner (not shown) which combination is drawn through the host pipe 6 by means of a winch 5 for example at the far end thereof.

Alternatively, but not illustrated, a protective sleeve may be inserted into a host pipe, and a thin wall deformed liner then inserted into the protective sleeve. The deformed liner may be held in its compact shape by tapes for example as previously described. Subsequently, the protective sleeve may be withdrawn from the host pipe leaving the thin walled deformed liner in the host pipe for expansion therein, or alternatively the protective sleeve housing the thin wall deformed liner may be left within the host pipe trapped between the liner and the host pipe.

Where the protective sleeve is to be withdrawn from the host pipe, it may be arranged to be that of a heavy duty high burst characteristic sleeve, or (to aid withdrawal) a longitudinally slit sleeve. Where the protective sleeve is left within the host pipe, this may well be of a low burst characteristic nature or again may be a longitudinally slit sleeve.

The final stage of the operation to seal the host pipe comprises pressurising and/or heating the deformed liner sufficiently to cause it to burst its wrapping or sleeving or ties if any of these arrangements is installed, and then to cause the protective sleeve to be burst or expanded and then to force all the elements of the installed system out to be close to or in contact with the host pipe bore.

Alternatively the protective sleeve may be withdrawn from the host pipe prior to pressurising and/or heating the deformed liner or again alternatively the protective sleeve may be withdrawn from the host pipe at some convenient stage after it has been caused to burst by the pressurising and/or heating of the initially deformed liner. Thereafter the initially deformed liner may continue to be pressurised and/or heated to cause it to expand with its burst wrapping, sleeving or ties if any be present until all the installed elements of the system are close to or in contact with the hose pipe bore.

Lubricant may be used to reduce friction between any of the interfaces of the host pipe, protective sleeve, and thin walled liner during insertion or withdrawal.

Alternatively water flow, or other fluid flow, may be used to assist insertion or withdrawal between any of the interfaces. Frustoconical fins for example may be added to the external wall of the protective sleeve or to the wrapping of the deformed liner to assist in the insertion and/or withdrawal thereof using a constant or fluctuating flow between the protective sleeve and the host pipe or between the deformed liner wrapping and the protective sleeve.

The protective sleeve may be slit longitudinally over its own length, or rendered easy to burst by intermittent slitting or some other form of weakening such as intermittent holing or piercing.

Where the protective sleeve is of a longitudinally slit nature, this would typically have a total circumference greater than the deformed liner external circumference. Such a sleeve would be manufactured so as to provide residual hoop stresses that would cause the edges created by longitudinally slitting to overlap. Such a slit protective sleeve can in certain circumstances be easier to insert in the host pipe than an equivalent diameter complete tube due to its reduced circumferential and torsional stiffness, and the potential for reduced diameter with increasing overlap. In addition advantageously during insertion of and after the pressurising of the thin wall liner, the slit sleeve would be easily opened out radially onto the internal host pipe wall even if it were of sufficient thickness to accommodate abnormally abrasive conditions during its insertion into the host pipe.

In order to avoid the problems of transporting a slit sleeve to the work site in the long lengths that would be required without creasing or kinking which could result from winding/unwinding from a reel, drum or coil, the slit tubular member may be progressively opened out. This is illustrated in Figures 4 and 5. The plastics material 7 in an overlapping state is rolled or wound onto a drum 9 ;as a relatively flat sheet 34 (or alternatively similarly wound or rolled into a free standing roll (not shown)). On subsequently unwinding the near flat strip 37 from drum 9 (which may have a convex receiving surface 8 for the receipt of the strip 37) it readily reverts back into a tube 35 having a similar amount of longitudinal edge overlap 33 to that which existed prior to opening out, flattening and winding flat. This memory recovery back into a slit tube with overlapping edges is optimised if the slit tube after opening out and flattening is wound in the radial plane in the direction originally towards the slit side from the 180° opposite unslit side. The rolled flattened slit sleeve 37 is shown to be slightly convex on its shaped drum, because this may promote more stable winding and/or a faster subsequent recovery after unwinding.

Such a protective slit sleeve may be weakly held together at its overlapping edges either by means of tape or wrapping for example or (to obviate the risk of abrasion damage) by welding or deploying an adhesive disposed under the external overlapping edge.

Such a transversely opened out and longitudinally rolled up slit sleeve as illustrated in Figures 4, 5 and 6 may be inserted into the host pipe before inserting the deformed liner 3.

Alternatively such a protective and/or constraining slit sleeve could be fed over a constrained or unconstrained deformed thin wall liner 3 (shown dotted in Figure 4 for example) during or after manufacture of the deformed thin wall liner before or during the insertion of same into the host pipe.

Figure 7 illustrates a further arrangement of the invention in which a deformed liner 40 has itself been made (for example, in circular cross section) in multi layer form, the outer layer being a weakly bonded, or unbonded abrasion resistant or abrasion accommodating layer .

The multi-layered tubular liner is deformed as in other embodiments, and the deformed shape constrained, without any degradation risk to the inner layer or layers of the liner, by means of an adhesive or spot or seam weld 41 for example along the point of contact between the outer layer or by any of the constraining means previously described, such as taping 42, wrapping, sleeving or tying, any of which could be helical or spiral in nature, or by heat deformation.

The weakly bonded, or unbonded abrasion resistant or abrasion accommodating outer layer 43 itself may be readily burstable at a later stage of the liner reversion process subsequent to the weld or bond or any of the previously described constraining means being broken. This may be achieved for example by incorporating a reduced thickness over part or all of that longitudinal region of the outer layer which is contained within the folds of the deformed multi layer 44 lining and therefore would not be exposed to abrasion risks during insertion into the host main.

This last embodiment allows the use of a hard and relatively inflexible outer layer in the manner described, but which use would not prevent the ready reversion and expansion of the multi layered deformed liner into close proximity with the host pipe bore (where this latter has an internal circumference greater than that of the liners manufactured overall outer circumference), or alternatively would not cause the liner to retract elastically back sufficiently from the host pipe bore (when the main is depressurised for maintenance for example) to reduce significantly the buckling resistance of the installed liner to ground water pressure via leaking joints for example in the host pipe.

An advantage of the invention is that it provides mainly by use of thin wall linings as defined hereinabove, a generally more economic lining method compared to the earlier mentioned lining methods primarily as the result of using cheaper materials and more economic techniques for installation.

Previously, one of the perceived problems of using thin wall polyethylene liners having diameter over wall thickness ratios greater than 50 or thereabouts has been the potential damage which would be caused in handling and installing such thin walled liners as the result of abrasion or cut promoting impact for example. Such abrasion or cutting for example would typically reduce the wall thickness of such thin walled liners locally by an unacceptable percentage of the original wall thickness bearing in mind the intended purpose of the liner. The invention as defined and described overcomes this potential problem by using a sacrificial or recoverable protective sleeve or sleeves as a major object of the invention. In addition to sealing effectively the host pipe, the very thin PE membrane liner would cause minimum hydraulic capacity loss and in most cases would significantly increase the original capacity of the host pipe as a result of the very smooth surface finish that normally exists on the bore of plastics tubes.

## Claims

1. Apparatus for lining a faulty, damaged and/or leaking pipe (1) comprising a deformed liner (3) disposed within a protective sleeve (2), the liner (3) having initially a smaller overall outside diameter than the inner diameter of the host pipe (1); the protective sleeve (2) being arranged to protect the liner (3) from damage during insertion thereof within the host pipe (1) and being tightly or loosely disposed around the deformed liner (3) and also having initially a smaller overall outside diameter than the inner diameter of the host pipe (1); the arrangement, dimensions and nature of the liner (3) being such that upon or shortly after applying pressure therewithin, it expands substantially to fit the bore of the host pipe (1);
**characterised in that**:
the liner (3) is a thin walled liner and is provided in the form of a reel(4) having wound thereon the liner (3) disposed within the protective sleeve (2), and **in that** the sleeve (2) is burstable or longitudinally slit; and bursts or, in the case of the longitudinally slit sleeve, expands as the liner (3) expands upon application of the said pressure.

2. Apparatus according to claim 1 wherein the sleeve (2) is burstable by virtue of being weakened.

3. Apparatus for lining a faulty, damaged and/or leaking host pipe (1) comprising a deformed liner (3) having initially a smaller overall outside diameter than the inner diameter of the host pipe (1); and a protective sleeve (2) to protect the liner from damage during insertion thereof within the host pipe (1); the sleeve (2) having initially a smaller overall outside diameter than the inner diameter of the host pipe (1); the arrangement dimensions and nature of the liner (3) being such that upon or shortly after applying pressure therewithin, it expands substantially to fit the bore of the host pipe (1);
**characterised in that**
the deformed liner (3) is a thin walled liner and the sleeve (2) is arranged to be inserted into the host pipe (1) before the liner (3) so as protect the liner (3) from damage during insertion thereof within the host pipe (1); and **in that** the sleeve (2) is burstable or longitudinally slit; and bursts or, in the case of the longitudinally slit sleeve, expands as the liner (2) expands upon application of the said pressure.

4. Apparatus according to claim 3 wherein the sleeve (2) is burstable by virtue of being weakened.

5. Apparatus as claimed in any one of claims 1 to 4 wherein the protective sleeve (2) is arranged for removal from the host pipe (1) after insertion of the liner (3) therein.

6. Apparatus as claimed in any one of claims 1 to 4 wherein the protective sleeve (2) is arranged for retention within the host pipe (1) after insertion of the liner (3) therein.

7. Apparatus as claimed in any one of the preceding claims wherein the thin wall liner (3) has, when initially disposed within the protective sleeve (2), a natural diameter appropriate for later viscoelastic expansion, being a close fit at the time of insertion.

8. Apparatus as claimed in any one of the preceding claims wherein the liner is of a reduced and/or deformed diameter when initially disposed in the protective sleeve (2) with respect to its natural diameter.

9. Apparatus as claimed in any one of the preceding claims wherein the thin wall liner (3) has a final diameter over wall thickness ratio between 50 and 150.

10. Apparatus as claimed in any one of the preceding claims wherein the protective sleeve (2) has a final diameter over wall thickness ratio between 50 and 300.

11. A method of lining a faulty, damaged and/or leaking pipe line using apparatus as defined in any one of the preceding claims, the method comprising inserting the protective sleeve (2) into the pipe line, the protective sleeve (2) initially being of smaller outside diameter than the inner diameter of the host pipe line (1), and providing within the protective sleeve the thin wall liner (3), the thin wall liner (3) being protected during its insertion by the protective sleeve (2); applying pressure and/or heat within the thin wall liner (3); the arrangement and dimensions and nature of the thin wall liner (3) being such that upon or shortly after such application within the thin wall liner (3) it expands substantially to fit the bore of the host pipe (1).

## Patentansprüche

1. Vorrichtung zur Auskleidung eines defekten beschädigten und/oder undichten Rohres (1), bestehend aus einer deformierten Auskleidung (3), die innerhalb einer Schutzhülle (2) angeordnet ist, wobei die Auskleidung (3) ursprünglich einen kleineren Gesamtaußendurchmesser aufweist als der Innendurchmesser des Hauptrohres (1); wobei die Schutzhülle (2) angeordnet ist, um die Auskleidung (3) gegen Beschädigung beim Einziehen in das Hauptrohr (1) zu schützen und die Schutzhülle dicht oder lose um die deformierte Auskleidung (3) herumgelegt ist und ebenfalls anfänglich einen Gesamtaußendurchmesser aufweist, der kleiner ist als der Innendurchmesser des Hauptrohres (1); und wobei die Anordnung, die Dimensionen und die Natur der Auskleidung (3) derart gewählt sind, daß diese Auskleidung beträchtlich expandiert, wenn ein Innendruck angewandt wird oder kurz danach, damit die Auskleidung sich der Bohrung des Hauptrohres (1) anpaßt,
**dadurch gekennzeichnet, daß**
die Auskleidung (3) eine dünnwandige Auskleidung ist, die in Form einer Bandspule (4) vorgesehen ist, auf der die Auskleidung (3) innerhalb der Schutzhülle (2) aufgewickelt ist und daß die Schutzhülle (2) aufplatzbar oder in Längsrichtung geschlitzt ist und aufplatzt oder im Falle einer längsgeschlitzten Schutzhülle sich ausdehnt, wenn die Auskleidung (3) nach Anwendung des Druckes expandiert.

2. Vorrichtung nach Anspruch 1, bei welcher die Schutzhülle (2) dadurch aufplatzbar ist, daß sie geschwächt ausgebildet ist.

3. Vorrichtung zur Auskleidung eines defekten beschädigten und/oder undichten Hauptrohres (1) mit einer deformierten Auskleidung (3), die ursprünglich einen Gesamtaußendurchmesser aufweist, der kleiner ist als der Innendurchmesser des Hauptrohres (1); wobei eine Schutzhülle (2) vorgesehen ist, um die Auskleidung gegen Beschädigung zu schützen, wenn sie in das Hauptrohr (1) eingeführt wird; wobei die Schutzhülle (2) ursprünglich einen Gesamtaußendurchmesser aufweist, der kleiner ist als der Innendurchmesser des Hauptrohres (1); und wobei die Anordnung, die Dimensionen und die Natur der Auskleidung (3) derart sind, daß nach Anwendung eines Druckes darin oder kurz danach die Auskleidung expandiert, um sich im wesentlichen der Innenbohrung des Hauptrohres (1) anzupassen,
**dadurch gekennzeichnet, daß**
die deformierte Auskleidung (3) eine dünnwandige Auskleidung ist und daß die Schutzhülle (2) in das Hauptrohr (1) eingezogen wird, bevor die Auskleidung (3) eingeführt wird, so daß die Auskleidung (3) gegen eine Beschädigung beim Einsetzen in das Hauptrohr (1) geschützt wird und daß die Schutzhülle (2) aufplatzbar oder in Längsrichtung geschlitzt ist und aufplatzt oder im Falle einer längsgeschlitzten Schutzhülle expandiert, so daß die Auskleidung (3) bei Anwendung des Druckes expandieren kann.

4. Vorrichtung nach Anspruch 3, bei welcher die Schutzhülle (2) durch Schwächungsstellen aufplatzbar ist.

5. Vorrichtung nach einem der Ansprüche 1 bis 4, bei welcher die Schutzhülle (2) derart ausgebildet ist, daß sie aus dem Hauptrohr (1) abgezogen werden kann, nachdem die Auskleidung (3) in das Rohr (1) eingefügt ist.

6. Vorrichtung nach einem der Ansprüche 1 bis 4, bei welcher die Schutzhülle (2) derart ausgebildet ist, daß sie innerhalb des Hauptrohres (1) verbleibt, nachdem die Auskleidung (3) in das Rohr eingesetzt ist.

7. Vorrichtung nach einem der vorhergehenden Ansprüche, bei welcher die dünne Wandauskleidung (3) bei ihrem ursprünglichen Einsatz in die Schutzhülle (2) einen natürlichen Durchmesser aufweist, der für eine spätere visko-elastische Expansion geeignet ist, wobei die Auskleidung (3) beim Einsetzen einen dichten Sitz aufweist.

8. Vorrichtung nach einem der vorhergehenden Ansprüche, bei welcher die Auskleidung bei ihrem ursprünglichen Einsatz in die Schutzhülle (2) einen verminderten und/oder deformierten Durchmesser gegenüber ihrem natürlichen Durchmesser aufweist.

9. Vorrichtung nach einem der vorhergehenden Ansprüche, bei welcher die dünne Wandauskleidung (3) einen Enddurchmesser gegenüber dem Wanddicken-Verhältnis zwischen 50 und 150 aufweist.

10. Vorrichtung nach einem der vorhergehenden Ansprüche, bei welcher die Schutzhülle (2) einen Enddurchmesser gegenüber dem Wanddicken-Verhältnis zwischen 50 und 300 aufweist.

11. Verfahren zur Auskleidung einer defekten beschädigten und/oder undichten Rohrauskleidung unter Benutzung einer Vorrichtung nach einem der vorhergehenden Ansprüche, wobei das Verfahren die folgenden Schritte aufweist: es wird die Schutzhülle (2) in die Rohrleitung eingesetzt, wobei die Schutzhülle (2) ursprünglich einen Außendurchmesser aufweist, der kleiner ist als der Innendurchmesser der Hauptrohrleitung (1); es wird innerhalb der Schutzhülle die dünnwandige Auskleidung (3) angebracht und diese dünnwandige Auskleidung (3) wird während ihres Einsatzes durch die Schutzhülle (2) geschützt; es wird Druck und/oder Hitze innerhalb der dünnwandigen Auskleidung (3) angebracht und die Anordnung und die Dimensionen und die Natur der dünnwandigen Auskleidung (3) werden derart gewählt, daß bei Aufbringen von Druck und/oder Hitze oder kurz danach innerhalb der dünnwandigen Auskleidung (3) diese expandiert und sich der Bohrung des Hauptrohres (1) im wesentlichen anpaßt.

## Revendications

1. Appareil pour revêtir un tuyau défectueux, endommagé et/ou non étanche (1), comprenant un manchon déformé (3) disposé à l'intérieur d'une gaine de protection (2), le manchon (3) possédant à l'origine un diamètre externe global inférieur au diamètre interne du tuyau hôte (1) ; la gaine de protection (2) étant arrangée pour protéger le manchon (3) contre une dégradation au cours de l'insertion de ce dernier dans le tuyau hôte (1) et étant disposée en ajustage serré ou avec du jeu autour du manchon déformé (3) et possédant également à l'origine un diamètre externe global inférieur au diamètre interne du tuyau hôte (1) ; l'arrangement, les dimensions et la nature du manchon (3) étant tels que, lorsqu'on lui applique de la pression depuis l'intérieur ou peu de temps après lui avoir appliqué de la pression depuis l'intérieur, il subit un élargissement substantiel pour épouser la forme de l'alésage du tuyau hôte (1) ; **caractérisé en ce que** le manchon (3) est un manchon à paroi mince et est fourni sous la forme d'une bobine (4) autour de laquelle est enroulé le manchon (3) disposé à l'intérieur de la gaine de protection (2), et **en ce que** la gaine (2) peut être soumise à une rupture ou bien est munie d'une fente en direction longitudinale et est soumise à une rupture ou, dans le cas d'une gaine munie d'une fente longitudinale, est soumise à un élargissement lorsque le manchon (3) s'élargit lors de l'application de ladite pression.

2. Appareil selon la revendication 1, dans lequel on confère à la gaine (2) une capacité de rupture par affaiblissement.

3. Appareil pour revêtir un tuyau défectueux, endommage et/ou non étanche (1), comprenant un manchon déformé (3) possédant à l'origine un diamètre externe global inférieur au diamètre interne du tuyau hôte (1) ; et une gaine de protection (2) étant arrangée pour protéger le manchon contre une dégradation au cours de l'insertion de ce dernier dans le tuyau hôte (1), la gaine (2) possédant à l'origine un diamètre externe global inférieur au diamètre interne du tuyau hôte (1) ; l'arrangement, les dimensions et la nature du manchon (3) étant tels que, lorsqu'on lui applique de la pression depuis l'intérieur ou peu de temps après lui avoir appliqué de la pression depuis l'intérieur, il subit un élargissement substantiel pour épouser la forme de l'alésage du tuyau hôte (1) ; **caractérisé en ce que** le manchon (3) est un manchon à paroi mince et est arrangé pour venir s'insérer dans le tuyau hôte (1) avant le manchon (3) de façon à protéger le manchon (3) contre une dégradation lors de l'insertion de ce dernier à l'intérieur du tuyau hôte (1), et **en ce que** la gaine (2) peut être soumise à une rupture ou bien est munie d'une fente en direction longitudinale et est soumise à une rupture ou, dans le cas d'une gaine munie d'une fente longitudinale, est soumise à un élargissement lorsque le manchon (3) s'élargit lors de l'application de ladite pression.

4. Appareil selon la revendication 3, dans lequel on confère à la gaine (2) une capacité de rupture par affaiblissement.

5. Appareil selon l'une quelconque des revendications 1 à 4, dans lequel la gaine de protection (2) est arrangée pour être retirée du tuyau hôte (1) après avoir inséré le manchon (3).

6. Appareil selon l'une quelconque des revendications 1 à 4, dans lequel la gaine de protection (2) est arrangée pour être retenue à l'intérieur du tuyau hôte (1) après avoir inséré le manchon (3).

7. Appareil selon l'une quelconque des revendications précédentes, dans lequel le manchon (3) à paroi mince possède, lorsqu'il est disposé à l'origine à l'intérieur de la gaine de protection (2), un diamètre naturel approprié pour obtenir une dilatation viscoélastique ultérieure, qui représente un ajustage fin au moment de l'insertion.

8. Appareil selon l'une quelconque des revendications précédentes, dans lequel le manchon possède un diamètre réduit et/ou déformé lorsqu'il est disposé à l'origine dans la gaine de protection (2), par rapport à son diamètre naturel.

9. Appareil selon l'une quelconque des revendications précédentes, dans lequel le manchon (3) à paroi mince possède un rapport du diamètre final à l'épaisseur de la paroi entre 50 et 150.

10. Appareil selon l'une quelconque des revendications précédentes, dans lequel la gaine de protection (2) possède un rapport du diamètre final à l'épaisseur de la paroi entre 50 et 300.

11. Procédé de revêtement d'un pipeline défectueux, endommagé et/ou non étanche en utilisant un appareil tel que défini dans l'une quelconque des revendications précédentes, le procédé comprenant le fait d'insérer la gaine de protection 2 dans le pipeline, la gaine de protection 2 possédant à l'origine un diamètre externe inférieur au diamètre interne du pipeline hôte 1, et le fait de procurer, à l'intérieur de la gaine de protection, un manchon 3 à paroi mince, le manchon 3 à paroi mince étant protégé au cours de son insertion par la gaine de protection 2 ; le fait d'appliquer de la pression et/ou de la chaleur à l'intérieur du manchon 3 à paroi mince ; l'arrangement, les dimensions et la nature du manchon (3) à paroi mince étant tels que, lorsqu'on applique au manchon 3 à paroi mince de la pression depuis l'intérieur ou peu de temps après avoir appliqué au manchon 3 à paroi mince de la pression depuis l'intérieur, il subit un élargissement substantiel pour épouser la forme de l'alésage du tuyau hôte (1).
